# EUROPÄISCHE PATENTANMELDUNG

(11) **EP 0 791 561 A2**
(43) Veröffentlichungstag der Anmeldung: **27.08.1997**
(21) Anmeldenummer: 96102494.0
(22) Anmeldetag: 20.02.1996
(51) Int. Cl.: C02F 3/30

(54) **Bauwerk für die mehrstufige biologische Reinigung von Abwasser**

(71) Anmelder: PASSAVANT-WERKE AG, D-65322 Aarbergen 7 (DE)
(72) Erfinder: Kirschhoch, Sonja, 65326 Aarbergen (DE); Schönborn, Hubert, 65326 Aarbergen (DE); Söhngen, Karl-Herrmann, 65582 Diez (DE)

(57) **Zusammenfassung**

Die Erfindung betrifft ein kombiniertes Bauwerk für die mehrstufige biologische Reinigung von organische Schmutzstoffe eenthaltenden Abwässern, das durch ein durch ringförmige Zwischenwände in drei konzentrische Kreis(ring)kammern unterteiltes Rundbecken gekennzeichnet ist. Die mit einer Umwälzeinrichtung ausgerüstete innere Kreiskammer ist die Zulaufkammer; sie dient der anaeroben Phosphat-Rücklösung. In der danach durchströmten mittleren Ringkammer, die ebenfalls mit einer Umwälzeinrichtung ausgestattet ist, findet die anoxische Denitrifikation der Stickstoffverbindungen statt. Die zuletzt durchströmte äußere Ringkammer ist mit Belüftungseinrichtungen versehen und dient der oxidativen Nitrifikation. Die Zwischenwände weisen die für den Kaskadendurchlauf erforderlichen Durchflußöffnungen auf. Mit diesem kompakten Bauwerk sind die Vorteile verbunden, daß der Platzbedarf gegenüber der aufgelösten Bauweise erheblich gesenkt und der Aufwand für verbindende Rohrleitungen und die Bewegung der Wasserströme verringert werden kann.

## Beschreibung

Die Neuerung betrifft ein kombiniertes Bauwerk für die mehrstufige biologische Reinigung von organische Schmutzstoffe enthaltendem Abwasser.

Bei der biologischen Reinigung von Abwasser werden die in den Schmutzstoffen enthaltenen Kohlenstoff-, Ammonstickstoff- und Phosphorverbindungen in mehreren Stufen durch Umwandlung in Gasform bzw. Einbau in den überschußschlamm eliminiert.

Für diese Elimination der Verbindungen hat sich eine feste Reihenfolge der Zonen mit den verschiedenen Milieubedingungen etabliert. So wird nach der mechanischen Reinigungsstufe zuerst eine anaerobe Zone zur biologischen Phosphor-Rücklosung, dann eine anoxische Zone zur Denitrifikation und schließlich eine oxische Zone zur Nitrifikation der Ammonstickstoffverbindungen aufgebaut. Die Darstellung der Zonen kann durch aufgelöste Bauweise in räumlich getrennten Becken oder in kompakterer Bauweise durch Segmentierung (Kaskadenbildung) langgestreckter Rechteckbecken erfgolgen. Die Zwischen- und/oder Abbauprodukte der beiden letztgenannten Zonen werden durch Rückpumpen (Rezirkulieren) in die anoxische Zone bzw. von der Nitrifikations- in die Denitrifikationszone weiter verstoffwechselt. Dafür sind erhebliche Aufwendungen für Rohrleitungen und Pumpen erforderlich, besonders bei der zuerst erwähnten aufgelösten Bauweise in Einzelbecken. Für die Fundamentierung der Bodenplatten und der zahlreichen Außenwände entstehen weitere hohe Kosten. Der Bedarf an Bauraum ist enorm.

Der Neuerung liegt deshalb die Aufgabe zugrunde, eine Beckenanordnung bzw. -konstruktion zu finden, die die Kosten für die Bauwerke selber, die Rohrleitungen und die Aufwendungen für die Rezirkulation der Wassermassen und auch den Platzbedarf erheblich verringert. Diese Aufgabe wird neuerungsgemäß gelöst durch ein durch ringförmige Zwischenwände in drei konzentrische Kreis(ring)kammern unterteiltes Rundbecken, bei dem die mit dem Abwasser beschickte innere Kreiskammer eine Umwälzeinrichtung zur anaeroben Phosphor-Rücklösung, die danach durchströmte mittlere Ringkammer Umwälzeinrichtungen zur gelöstsauerstofffreien ("anoxischen") Denitrifikation der stickstoffhaltigen Abwasserinhaltsstoffe, die zum Schluß durchströmte äußere Ringkammer Umwälz- und Belüftungseinrichtungen zur gelöstsauerstoffverbrauchenden Nitrifikation der aus der mittleren Ringkammer ankommenden Stickstoffverbindungen (vorwiegend Ammoniumverbindungen) und die Zwischenwände Durch- und/oder überströmöffnungen enthalten. Die Beschickung des kombinierten Beckens erfolgt über eine Dükerleitung unterhalb der Bodenplatte oder über eine durch die Ringwände in die innere Kammer geführte Rohrleitung.

Ein weiterer Vorteil gegenüber der aufgelösten Bauweise ist in dem wesentlich geringeren hydraulischen Höhenverlust bei dem Durchlauf durch die Kammern zu sehen, so daß sich günstigere Kosten für die Pumpenleistung ergeben. Die Gründungstiefe für die Nachklärstufe ist nahezu die gleiche, so daß gleiche baugeologische Voraussetzungen, wie z.B. Tragfähigkeit des Bodens, gegeben sind, was sich wiederum positiv auf die Baukosten auswirkt.

Vorteilhafterweise wird der für die Kohlenstoff- und Stickstoffoxidation erforderliche Sauerstoff in die äußere Ringkammer punktförmig eingetragen, z.B. mit horizontalachsigen Oberflächenbelüftern, wie Mammutrotoren, oder mit kurzen Belüftungsgittern. Dadurch wird es möglich, bei ausreichender Nitrifikation ein Teilvolumen zusätzlich zur simultanen Denitrifikation zu nutzen in Verbindung mit den Vorteilen der Umlaufbeckentechnologie. Dadurch stellt sich das jeweils anteilige Volumen für die Nitrifikation und die Denitrifikation in weiten Bereichen variabel dar. Energieeinsparung und optimale Reinigungsleistungen sind dadurch erzielbar.

Vorstellbar ist auch eine Kaskadierung der äußeren Ringkammer durch radial verlaufende Trennwände, so daß eine Kaskadenbiologie in Rundbauweise entsteht. Insbesondere für die Belüftung mit Druckluft stellen sich hier Vorteile ein.

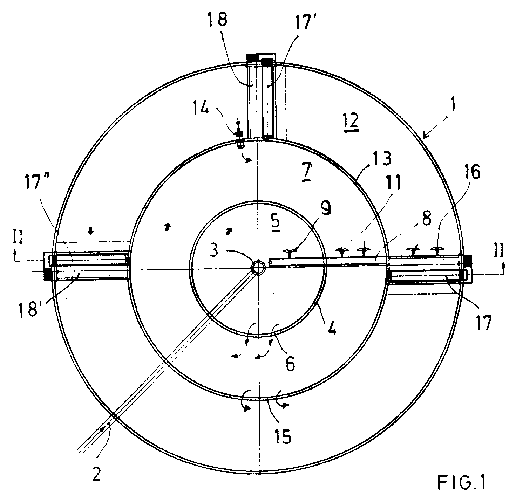

Die Abbildungen zeigen eine bevorzugte Ausführungsform der Neuerung in der Draufsicht (Fig. 1) und im Schnitt II-II (Fig. 2) nach Fig. 1.

Das als Rundbecken 1 auf einer gemeinsamen Bodenplatte 1' ausgeführte kombinierte Bauwerk besitzt im Zentrum einen von der Dükerleitung 2 beaufschlagten Zulaufsumpf 3. Von dort wird die durch die innere Ringwand 4 umgrenzte innere Kreiskammer 5 mit mechanisch vorgereingtem Abwasser und Rücklaufschlamm beaufschlagt. In der Ringwand 4 befindet sich eine überlauföffnung 6, über die das in der inneren Kreiskammer 5 mehrfach umgelaufene Abwasser in die mittlere Ringkammer 7 überströmt. An der das Kreisbecken bis in die Nähe des Zentrums überspannenden ortsfesten Brücke 8 ist in der inneren Kammer 5 ein Rührwerkspropeller 9 angeordnet, der für die sauerstoffarme Umwälzung des Abwassers sorgt. Die Brücke 8 ist mit ihrem inneren Ende durch einen in der Nähe des Zulaufsumpfes 3 aufgestellten Pfeiler 10 abgestützt.

Die mittlere Ringkammer 7 enthält ebenfalls nur Rührwerkspropeller 11, die das aus der inneren Kammer überführte Abwasser ohne Sauerstoffzufuhr im Kreis umwälzen. Aus der äußeren Ringkammer 12 wird jedoch belüftetes und folglich mit Oxidationsprodukten, wie Kohlenstoff- und Stickstoffverbindungen (als Nitrat), angereichertes Abwasser mit Hilfe einer in der äußeren Ringwand 13 installierten Pumpe 14 in die mittlere Ringkammer 7 zurückgepumpt. Der biologische Abbau ist aufgrunnd der vorhandenen Sauerstoffverbindungen (NO₂, NO₃) in dieser Kammer anoxisch und nicht anaerob.

Das überlaufwehr 15 aus dieser Kammer 7 liegt der Pumpe 14 diametral gegenüber, so daß das bei 14 zugeführte Rücklaufwasser wenigstens einen halben Umlauf in der mittleren Ringkammer vollführt hat. Umgekehrt hat das bei 6 in diese Kammer einlaufende Abwasser bis zur Zumischung des Rücklaufwassers ebenfalls wenigstens einen halben Umlauf vollführt.

Die äußere Ringkammer 12 ist sowohl mit Umwälz- als auch mit mehreren Oberflächenbelüftungseinrichtungen 16, 17, 17', 17'' bestückt. Die Oberflächenbelüfter sind als um Horizontalachsen rotierende Walzen ausgebildet. Einer der Belüfter 17 wird von dem äußeren Abschnitt der durchgehenden Brücke 8, die beiden anderen werden von zusätzlichen kurzen Brücken 18, 18' getragen, Gegen die Bildung von Aerosolen sind Spritzschutz- und Abdeckhauben auf der Abströmseite der Walzen eingesetzt. Alle Brücken sind von außen begehbar für die Wartung der Umwälz-, Belüftungs- und Rückpumpeinrichtungen.

Wie Fig.2 zeigt, sind die Rührpropeller 9, 11, 16 an Ständern gelagert, die vom Beckenboden bis zu der Brücke verlaufen. Die Rührpropeller sind an den Ständern hochziehbar.

Alternativ zu dieser Ausführungsform kann die äußere Ringkammer durch radiale Trennwände in Kaskaden unterteilt sein, die nacheinander durchströmt und einzeln belüftet werden. Die überlaufwehre können je nach Beeinflussung der Zumischstelle durch Bodenöffnungen ersetzt oder ergänzt werden.

## Patentansprüche

1. Kombiniertes Bauwerk für die mehrstufige biologische Reinigung von organische Schmutzstoffe enthaltendem Abwasser, **gekennzeichnet durch** ein durch ringförmige Zwischenwände (4, 13) in drei konzentrische Kreis(ring)kammern (5, 7, 12) unterteiltes Rundbecken, wobei die mit dem Abwasser beschickte innere Kreiskammer (5) eine Umwälzeinrichtung (9) zur anaeroben Phosphor-Rücklösung, die danach durchströmte mittlere Ringkammer (7) Umwälzeinrichtungen (11) zur sauerstoffarmen ("anoxischen") Denitrifikation der stickstoffhaltigen Abwasserinhaltsstoffe, die zum Schluß durchströmte äußere Ringkammer (12) Umwälz- und Belüftungseinrichtungen (16, 17, 17', 17'') zur sauerstoffverbrauchenden Nitrifikation der aus der mittleren Ringkammer (7) abfließenden Stickstoffverbindungen und die ringförmigen Zwischenwände (4, 13) Durch- und/oder Uberströmöffnungen (6, 15) enthalten.

2. Bauwerk nach Anspruch 1, **gekennzeichnet durch** eine radial durchlaufende unbewegliche Brücke (8), die die Umwälzeinrichtungen (9, 11, 16) der inneren und mittleren Kammer (5, 7) und eine Belüftungseinrichtung (17) der äußeren Ringkammer (12) trägt.

3. Bauwerk nach Anspruch 1 oder 2, **dadurch gekennzeichnet**, daß die äußere Ringkammer (12) mehrere auf den Umfang verteilte, punktförmig wirkende Belüftungseinrichtungen (17, 17', 17'') mit dazwischen liegenden sauerstoffarmen Abschnitten zur simultanen Denitrifikation aufweist.

4. Bauwerk nach Anspruch 1, 2 oder 3, **dadurch gekennzeichnet**, daß die äußere Ringkammer durch radial verlaufende Trennwände in nacheinander durchströmte Kaskadenkammern unterteilt ist, die jeweils mit Belüftungseinrichtungen ausgerüstet sind.
